# EUROPEAN PATENT APPLICATION

(11) **EP 4 106 384 A1**
(43) Date of publication of application: **21.12.2022**
(21) Application number: 20919562.7
(22) Date of filing: 20.02.2020
(51) Int. Cl.: H04W 24/00

(54) **MEASUREMENT METHODS BASED ON STATE SWITCHING, ELECTRONIC DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN)
(74) Representative: Rossi, Ugo
(86) International application number: PCT/CN2020/075987
(87) International publication number: WO 2021/163951

(57) **Abstract**

Disclosed in the present application is a measurement method based on state switching, comprising: a terminal device receives a first parameter and a second parameter; when the state of beam failure detection is switched from a second state to a first state, the terminal device performs beam failure detection on the basis of the first parameter; the second parameter is used for beam failure detection when the state of beam failure detection is switched from the first state to the second state. Also disclosed in the present application are another measurement method based on state switching, an electronic device, and a storage medium.

## Description

### Technical Field

The present application relates to the field of radio communication technologies, in particular to a measurement method based on state switching, an electronic device, and a storage medium.

### Background

In related arts, for a User Equipment (UE) with low mobility, when a beam failure detection state changes, for example, it is switched from relaxed beam failure detection to normal beam failure detection or switched from the normal beam failure detection to the relaxed beam failure detection, how to perform beam failure detection is not solved at present.

### Summary

In order to solve the above technical problem, embodiments of the present application provide a measurement method based on state switching, an electronic device and a storage medium, which defines how the terminal device performs beam failure detection when the beam failure detection state changes.

In a first aspect, a measurement method based on state switching is provided in an embodiment of the present application, which includes: a terminal device receives a first parameter and a second parameter; when a beam failure detection state is switched from a second state to a first state, the terminal device performs beam failure detection based on the first parameter; wherein the second parameter is used for beam failure detection when the beam failure detection state is switched from the first state to the second state.

In a second aspect, a measurement method based on state switching is provided in an embodiment of the present application, which includes: a terminal device receives a third parameter and a fourth parameter; when a radio link monitoring state is switched from a fourth state to a third state, the terminal device performs radio link failure detection based on the third parameter; wherein the fourth parameter is used for radio link failure detection when the radio link monitoring state is switched from the third state to the fourth state.

In a third aspect, a measurement method based on state switching is provided in an embodiment of the present application, which includes: a network device sends a fifth parameter and a sixth parameter; wherein the fifth parameter is used for beam failure detection when a beam failure detection state is switched from a second state to a first state, and the sixth parameter is used for beam failure detection when a beam failure detection state is switched from the first state to the second state; or, the fifth parameter is used for radio link failure detection when a radio link monitoring state is switched from a fourth state to a third state, and the sixth parameter is used for radio link failure detection when a radio link monitoring state is switched from the third state to the fourth state.

In a fourth aspect, a terminal device is provided in an embodiment of the present application, which includes: a first receiving unit, configured to receive a first parameter and a second parameter; a first processing unit, configured to perform beam failure detection based on the first parameter when a beam failure detection state is switched from a second state to a first state; wherein the second parameter is used for beam failure detection when the beam failure detection state is switched from the first state to the second state.

In a fifth aspect, a terminal device is provided in an embodiment of the present application, which includes: a second receiving unit, configured to receive a third parameter and a fourth parameter; a second processing unit, configured to perform radio link failure detection based on the third parameter, when a radio link monitoring state is switched from a fourth state to a third state; wherein the fourth parameter is used for radio link failure detection when the radio link monitoring state is switched from the third state to the fourth state.

In a sixth aspect, a network device is provided in an embodiment of the present application, which includes: a sending unit, configured to send a fifth parameter and a sixth parameter; wherein the fifth parameter is used for beam failure detection when a beam failure detection state is switched from a second state to a first state, and the sixth parameter is used for beam failure detection when a beam failure detection state is switched from the first state to the second state; or, the fifth parameter is used for radio link failure detection when a radio link monitoring state is switched from a fourth state to a third state, and the sixth parameter is used for radio link failure detection when a radio link monitoring state is switched from the third state to the fourth state.

In a seventh aspect, a terminal device is provided in an embodiment of the present application, which includes: a processor and a memory configured to store a computer program that is capable of being run on the processor, wherein the processor is configured to perform acts of the measurement method based on state switching performed by the terminal device when the computer program is run on the processor.

In an eighth aspect, a network device is provided in an embodiment of the present application, which includes: a processor and a memory configured to store a computer program that is capable of being run on the processor, wherein the processor is configured to perform acts of the measurement method based on state switching performed by the network device when the computer program is run on the processor.

In a ninth aspect, a chip is provided in an embodiment of the application, which includes a processor configured to invoke and run a computer program from a memory, to enable a terminal device having the chip installed therein to perform the measurement method based on state switching performed by the terminal device.

In a tenth aspect, a chip is provided in an embodiment of the application, which includes a processor configured to invoke and run a computer program from a memory, to enable a network device having the chip installed therein to perform the measurement method based on state switching performed by the network device.

In an eleventh aspect, a storage medium is provided in an embodiment of the present application, which stores an executable program, wherein, when the executable program is executed by a processor, the measurement method based on state switching performed by the terminal device is implemented.

In a twelfth aspect, a storage medium is provided in an embodiment of the present application, which stores an executable program, wherein, when the executable program is executed by a processor, the measurement method based on state switching performed by the network device is implemented.

In a thirteenth aspect, a computer program product is provided in an embodiment of the present application, which includes computer program instructions that enable a computer to implement the measurement method based on state switching performed by the network device.

In a fourteenth aspect, a computer program product is provided in an embodiment of the present application, which includes computer program instructions that enable a computer to implement the measurement method based on state switching performed by the network device.

In a fifteenth aspect, a computer program is provided in an embodiment of the present application, which enables a computer to perform the measurement method based on state switching performed by the terminal device.

In a sixteenth aspect, a computer program is provided in an embodiment of the present application, which enables a computer to perform the measurement method based on state switching performed by the network device.

A measurement method based on state switching, an electronic device and a storage medium are provided in the embodiments of the present application. The measurement method based on state switching includes the following acts: a terminal device receives a first parameter and a second parameter; when a beam failure detection state is switched from a second state to a first state, the terminal device performs beam failure detection based on the first parameter; wherein the second parameter is used for beam failure detection when the beam failure detection state is switched from the first state to the second state. It is defined that different beam failure detection states correspond to different parameters for beam failure detection. When the beam failure detection state is switched from the second state to the first state, the terminal device performs beam failure detection based on the first parameter; when the beam failure detection state is switched from the first state to the second state, the terminal device performs beam failure detection based on the second parameter. In this way, requirements of the network on beam failure detection under different measurement criteria can be adapted.

### Brief Description of Drawings

FIG. 1 is a schematic diagram of a composition structure of a communication system according to an embodiment of the present application.
FIG. 2 is a schematic flowchart of an alternative processing of a measurement method based on state switching provided in an embodiment of the present application.
FIG. 3 is a schematic diagram of a processing for switching a normal BFD state to a relax BFD state in an embodiment of the present application;
FIG. 4 is a schematic flowchart of another alternative processing of a measurement method based on state switching provided in an embodiment of the present application.
FIG. 5 is a schematic diagram of an RLF process for switching from a normal RLM to a relaxed RLM in an embodiment of the present application.
FIG. 6 is a schematic flowchart of yet another alternative processing of a measurement method based on state switching provided in an embodiment of the present application.
FIG. 7 is a schematic diagram of an alternative composition structure of a terminal device according to an embodiment of the present application.
FIG. 8 is a schematic diagram of another alternative composition structure of a terminal device according to an embodiment of the present invention.
FIG. 9 is a schematic diagram of an alternative composition structure of a network device according to an embodiment of the present application.
FIG. 10 is a schematic diagram of a hardware composition structure of an electronic device according to an embodiment of the present application.

### Detailed Description

In order to understand features and technical contents of embodiments of the present application in more detail, implementations of the embodiments of the present application will be described in detail below in combination with accompanying drawings, which are for reference and description only and are not intended to limit the embodiments of the present application.

Before the measurement method based on state switching provided in embodiments of the present application is described in detail, the Beam Failure Detection (BFD) and Radio Link Monitoring (RLM) in the related technology are briefly described.

At present, with people's pursuit for speed, delay, high-speed mobility, and energy efficiency, and diversity and complexity of services in future life, the 3rd Generation Partnership Project (3GPP) International Organization for Standard has begun to research and develop the 5th-generation (5G) communication. Main application scenarios of the 5G are: Enhance Mobile Broadband (eMBB), Ultra Reliable Low Latency Communications (URLLC), and Massive Machine Type Communication (mMTC).

The eMBB still aims at enabling users to obtain multimedia contents, services, and data, and demands thereof are growing very rapidly. On the other hand, since the eMBB may be deployed in different scenarios, such as indoor, an urban district, and a rural area, and differences in their capabilities and demands are also relatively large, they cannot be generalized, and must be analyzed in detail in combination with specific deployment scenarios. Typical applications of the URLLC include: industrial automation, power automation, telemedicine operation (surgery), traffic safety guarantee, or the like. Typical characteristics of the mMTC include: a high connection density, a small data volume, a latency-insensitive service, a low cost and a long service life of modules, or the like.

New Radio (NR) systems may also be deployed in a standalone way. In order to reduce air interface signaling, quickly recover radio connections and data services, a new Radio Resource Control (RRC) state (i.e., RRC-Inactive state) is defined. Herein, in an Idle (RRC_Idle) state, mobility is a UE-based cell reselection, paging is initiated by a Core Network (CN), and a paging area is configured by the CN. There is no terminal device context and no RRC connection on a network device side. In the RRC_Inactive state, mobility is a UE-based cell reselection, there is a connection between a CN and an NR, there is a terminal device context on a certain network device, paging is triggered by an RAN, a RAN-based paging area is managed by the RAN, and a location of the terminal device known by the network device is at a RAN-based paging area level.

The following is description of BFD in related technologies.

For beam management, the NR system introduces a Beam Failure Recovery (BFR) procedure, in which the terminal device can indicate a new SSB or CSI-RS beam to the network device when the serving Synchronization Signal Block (SSB)/Channel Status Indicator Reference Signal (CSI) beam fails. The physical layer of the terminal device sends a beam failure indication to a Media Access Control (MAC) layer; and the beam failure detection is accomplished by counting these beam failure indications. Specifically, the MAC layer of the terminal device maintains a counter BFI_COUNTER (beam failure indication counter), and an initial value of the BFI_COUNTER is set to 0; every time the MAC layer receives a beam failure indication from the physical layer, the BFI_COUNTER is automatically increased by 1, and a BeamFailureDetectionTimer is started or restarted at the same time. The BFI_COUNTER is cleared every time the Beam Failure Detection Timer times out. When BFI_COUNTER is greater than or equal to a threshold that is BeamFailureInstanceMaxCount configured by a Radio Resource Control (RRC) signaling, the terminal device considers that a beam failure occurs and triggers a beam failure recovery procedure.

The following is description of RLM in related technologies.

The RLM is used to monitor a channel quality of a downlink of a serving cell, a physical layer of a terminal device evaluates a radio link quality within a preset time, compares the radio link quality with Qin threshold and Qout threshold of Signal to Interference plus Noise Ratio (SINR), and if the radio link quality is lower than Qout, the physical layer reports a downlink out-of-sync indication to the high layer; if the radio link quality is higher than Qin, the physical layer reports a downlink in-of-sync indication to the higher layer. Qout and Qin thresholds are determined by detecting Block Error Rate (BLER) of Physical Downlink Control Channel (PDCCH) format 1-0. The BLER values corresponding to Qin and Qout are configured by RRC signaling per cell. The default values are BLER for Qout being 10% and BLER for Qin being 2%.

The following timers and constants are involved in the determination of downlink out-of-sync of the network device by the terminal device: N310, T310 and N311. These timers and constant parameters may be configured to the terminal device by dedicated signaling, such as RLF-TimersAndConstants IE; if these timers and constant parameters are configured by the dedicated signaling, they are configured by the parameter UE-TimersAndConstants IE in the system broadcast (SIB1).

When the terminal device is in the RRC_CONNECTED state and receives continuous N310 "out_of_sync", and T310, T301, T304 and T311 are not running, the timer T310 is started. If continuous N311 "in_sync" are received before the timer T310 times out, the timer T310 is stopped, indicating that downlink synchronization has been resumed at the terminal device. Otherwise, the terminal device is in a downlink out-of-sync state, that is, in Radio Link Failure (RLF).

For NB-IoT and eMTC terminal device with low mobility, when the Reference Signal Receiving Power (RSRP) of the serving cell changes rarely, it means that the terminal device has little demand for cell reselection, so the neighbor cell measurement may be relaxed to achieve the purpose of energy saving of the terminal device.

Specifically, when an s-SearchDeltaP is configured in a system message (SIB3), it indicates that the cell supports the terminal device to relax the neighbor cell measurement. The terminal device can perform neighbor cell measurement relaxation if and only if the following conditions are met.
1. Within the time range TSearchDeltaP, a condition of neighbor cell measurement relaxation is satisfied.
2. It is less than 24 hours (24H) from the last measurement.

A condition of measurement relaxation is (SrxlevRef-Srxlev) < SSearchDeltaP.

Where Srxlev is a current Srxlev measurement value of a serving cell, and SrxlevRef is a reference Srxlev value of the serving cell.

When the terminal device selects a new cell or re-selects to a new cell; or if (Srxlev-SrxlevRef) > 0, or if the condition of measurement relaxation is not met within the TSearchDeltaP, the terminal device sets SrxlevRef as the current Srxlev measurement value of the serving cell; wherein the value of TSearchDeltaP is 5 minutes, or if eDRX is configured and the eDRX period is longer than 5 minutes, the value of TSearchDeltaP is the length of the eDRX period.

In the terminal device energy saving project of NR Release 17 (Rel-17), it is planned to introduce measurement relaxation to the BFD and RLM, which means that for terminal device with low mobility, the physical layer measurement for RLM/BFD will be relaxed due to the consideration in energy saving, that is, the measurement interval will increase. If the existing BFD mechanism and RLM mechanism are still used, there will be some issues, such as whether the Qin/Qout generated by different measurement intervals can be counted continuously, and whether the beam failure indications from different measurement intervals can be counted continuously. Whether the existing timer is still applicable and needs to be extended are issues that need to be solved.

A measurement method based on state switching is provided in an embodiment of the present application. The measurement method based on state switching of the embodiment of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, an advanced long term evolution (LTE-A) system, a new radio (NR) system, an evolution system of an NR system, a LTE-based access to unlicensed spectrum (LTE-U) system, an NR-based access to unlicensed spectrum (NR-U) system, a universal mobile telecommunication system (UMTS), a worldwide interoperability for microwave access (WiMAX) communication system, wireless local area networks (WLAN), wireless fidelity (WiFi), a next generation communication system or other communication systems, etc.

Generally speaking, the traditional communication system supports the limited quantity of connections, and is also easy to implement. However, with the development of communication technology, the mobile communication system will not only support traditional communication, but also support, for example, the device to device (D2D) communication, the machine to machine (M2M) communication, the machine type communication (MTC), or the vehicle to vehicle (V2V) communication, etc., and the embodiments of the present application may also be applied to these communication systems.

System architectures and service scenarios described in the embodiments of the present application are intended to illustrate the technical solutions of the embodiments of the present application more clearly, and do not constitute a limitation to the technical solutions provided by the embodiments of the present application. Those of ordinary skilled in the art can know that with evolvement of network architectures and emergence of new service scenarios, the technical solutions provided by the embodiments of the present application are also applicable to similar technical problems.

The network device involved in the embodiments of the present application may be an ordinary base station (such as a NodeB, or an eNB, or a gNB), a new radio controller (an NR controller), a centralized unit, a new radio base station, a radio remote module, a micro base station, a relay, a distributed unit, a transmission reception point (TRP), a transmission point (TP), or any other device. The embodiments of the present application do not limit the specific technology and the specific device form adopted by the network device. For convenience of description, in all embodiments of the present application, the above-mentioned apparatuses for providing wireless communication functions for the terminal device are collectively referred to as a network device.

In the embodiments of the present application, the terminal device may be any terminal, for example, the terminal device may be a user device for machine type communication. In other words, the terminal may be referred to as a User Equipment (UE), a Mobile Station (MS), a mobile terminal, a terminal, etc., and may communicate with one or more core networks via a Radio Access Network (RAN). For example, the terminal device may be a mobile phone (also called "cellular" phone), a computer with a mobile terminal, etc. For example, terminal devices may also be portable, pocket-size, handheld, computer-built or vehicle-mounted mobile devices that exchange voice and/or data with wireless access networks. The terminal device is not specifically limited in the embodiments of the present application.

Optionally, the network device and the terminal device may be deployed on land, including indoors or outdoors, hand-held or vehicle-mounted; or may be deployed on a water surface; or may be deployed on a plane, a balloon, or a satellite in the air. The embodiments of the present application do not limit application scenarios of the network device and the terminal device.

Optionally, communications between a network device and a terminal device and between terminal devices may be performed through a licensed spectrum, or an unlicensed spectrum, or both, at the same time. Communications between the network device and the terminal device and between terminal devices may be performed through a spectrum below 7 gigahertz (GHz), or through a spectrum above 7GHz, or using both the spectrum below 7GHz and the spectrum above 7Ghz at the same time. The embodiments of the present application do not limit spectrum resources used between the network device and the terminal device.

Generally speaking, the traditional communication system supports the limited quantity of connections, and is also easy to implement. However, with the development of communication technology, the mobile communication systems will not only support traditional communication, but also support, for example, the device to device (D2D) communication, the machine to machine (M2M) communication, the machine type communication (MTC), or the vehicle to vehicle (V2V) communication, etc., and the embodiments of the present application may also be applied to these communication systems.

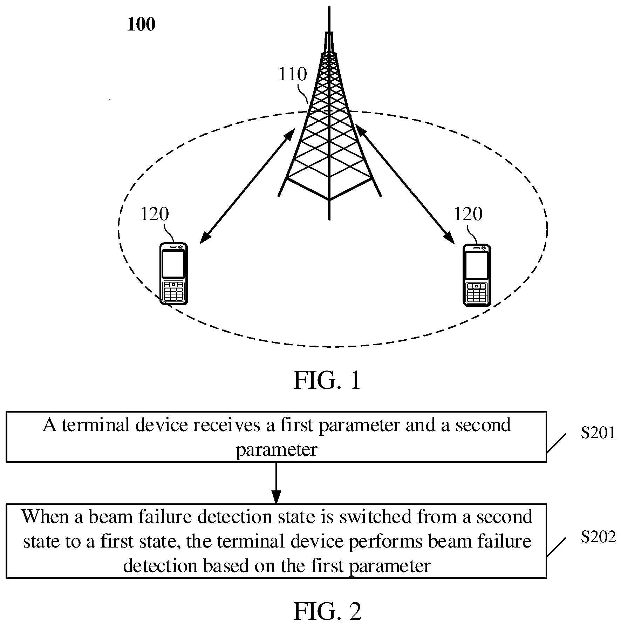

Exemplarily, a communication system 100 applied in an embodiment of the present application is shown in FIG. 1. The communication system 100 may include a network device 110. The network device 110 may be a device that communicates with terminal devices 120 (or referred to as communication terminals, or terminals). The network device 110 may provide communication coverage for a specific geographical area, and may communicate with terminal devices located within the coverage area. Optionally, the network device 110 may be a Base Transceiver Station (BTS) in a GSM system or CDMA system, or a NodeB (NB) in a WCDMA system, or an Evolutional Node B (eNB or eNodeB) in an LTE system, or a radio controller in a Cloud Radio Access Network (CRAN). Or the network device may be a mobile switching center, a relay station, an access point, a vehicle-mounted device, a wearable device, a hub, a switch, a bridge, a router, a network side device in a 5G network, or a network device in a future evolved Public Land Mobile Network (PLMN), etc.

The communication system 100 further includes at least one terminal device 120 located within the coverage range of the network device 110. As used herein, the term "terminal device" includes, but is not limited to, a device configured to connect via a wired circuit, for example, a Public Switched Telephone Network (PSTN), a Digital Subscriber Line (DSL), a digital cable, a direct cable; and/or another data connection/network, and/or via a wireless interface, for instance, for a cellular network, a Wireless Local Area Network (WLAN), a digital television network such as a DVB-H network, a satellite network, and an AM-FM broadcast transmitter; and/or an apparatus, of another terminal device, configured to receive/send a communication signal; and/or an Internet of Things (IoT) device. A terminal device configured to communicate via a wireless interface may be referred to as "a wireless communication terminal", "a wireless terminal" or "a mobile terminal". Examples of the mobile terminal include, but are not limited to, a satellite or cellular phone; a Personal Communications System (PCS) terminal capable of combining a cellular radio phone with data processing, facsimile, and data communication capabilities; a Personal Digital Assistant (PDA) that may include a radio phone, a pager, internet/intranet access, a Web browser, a memo pad, a calendar, a Global Positioning System (GPS) receiver; and a conventional laptop and/or palmtop receiver or another electronic apparatus including a radio phone transceiver. The terminal device may refer to an access terminal, a User Equipment (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or another processing device connected to a wireless modem, a vehicle-mounted device, a wearable device, a terminal device in a 5G network, or a terminal device in a future evolved Public Land Mobile Network (PLMN), or the like.

Optionally, Device to Device (D2D) communication may be performed between the terminal devices 120.

Optionally, the 5G system or 5G network may also be referred to as a New Radio (NR) system or an NR network.

FIG. 1 exemplarily illustrates one network device and two terminal devices. Optionally, the communication system 100 may include multiple network devices, and other quantity of terminal devices may be included within the coverage area of each network device, which is not limited in the embodiments of the present application.

Optionally, the communication system 100 may also include another network entity, such as a network controller, a mobile management entity, etc., which is not limited in the embodiments of the present application.

It should be understood that a device with a communication function in a network/system in the embodiments of the present application may also be referred to as a communication device. Taking the communication system 100 shown in FIG. 1 as an example, communication devices may include a network device 110 and terminal devices 120 which have communication functions, and the network device 110 and the terminal devices 120 may be the specific devices described above, and will not be described repeatedly herein. The communication devices may also include other devices in the communication system 100, for example other network entities, such as a network controller and a mobile management entity, which is not limited in the embodiments of the present application.

An alternative processing flow of a measurement method based on state switching provided in an embodiment of the present application, as shown in FIG. 2, includes the following acts S201 and S202.

In the act S201, a terminal device receives a first parameter and a second parameter.

In some embodiments, the first parameter may include a parameter value of a first beamFailureInstanceMaxCount and/or a first value of a beamFailureDetectionTimer. The second parameter may include a parameter value of a second beamFailureInstanceMaxCount and/or a second value of the beamFailureDetectionTimer.

The first parameter is used for beam failure detection when a beam failure detection state is a first state, and the second parameter is used for beam failure detection when the beam failure detection state is a second state. The first parameter and the second parameter are carried in a Radio Link Monitoring Config message.

In a specific implementation, the terminal device receives an RRC reconfiguration message sent by the network device, and obtains the Radio Link Monitoring Config based on the RRC reconfiguration message.

In some embodiments, the Radio Link Monitoring Config may include a failureDetectionResources configuration in addition to the first parameter and the second parameter.

In the act S202, when the beam failure detection state is switched from the second state to the first state, the terminal device performs beam failure detection based on the first parameter.

In some embodiments, the first state is relaxed beam failure detection and the second state is normal beam failure detection; or, the first state is the normal beam failure detection and the second state is the relaxed beam failure detection. Herein a beam measurement time interval of the relaxed beam failure detection is larger than a beam measurement time interval of the normal beam failure detection.

Taking the second state being the normal beam failure detection, and the first state being the relaxed beam failure detection as an example, when the beam failure detection state is switched from the normal beam failure detection to the relaxed beam failure detection, the terminal device performs the beam failure detection based on the first parameter corresponding to the relaxed beam failure detection.

In a specific implementation, the terminal device performs beam failure detection based on the first BeamFailureInstanceMaxCount and the first value of the BeamFailureDetectionTimer in the first parameter. When the terminal device receives a beam failure indication sent by a physical layer, the terminal device configures to increase a value of a BFI_COUNTER by 1 (an initial value of the BFI_COUNTER is 0), starts or restarts the BeamFailureDetectionTimer, and configures a value of the BeamFailureDetectionTimer as the first value. When the BeamFailureDetectionTimer times out, the terminal device configures a value of the BFI_COUNTER to be zero. When the BeamFailureDetectionTimer does not time out and the value of the BFI_COUNTER is greater than or equal to the first BeamFailureInstanceMaxCount, the terminal device determines that a beam failure occurs.

In some embodiments, when the terminal device performs the beam failure detection based on the first parameter, the terminal device may determine to configure a value of a BFI_COUNTER to be zero according to second indication information sent by the network device, and/or stop running the BeamFailureDetectionTimer. For example, if the second indication information indicates that the value of the BFI_COUNTER is configured to be zero, the terminal device configures the value of the BFI_COUNTER to be zero. If the terminal device does not receive the second indication information, the terminal device configures the value of the BFI_COUNTER to be zero by default. If the second indication information indicates to stop running the BeamFailureDetectionTimer, the terminal device stops running the BeamFailureDetectionTimer. If the terminal device does not receive the second indication information, the terminal device stops running the BeamFailureDetectionTimer by default.

The second indication information is carried in any one of an RRC signaling, a Media Access Control Control Element (MAC CE), and a PDCCH.

In some embodiments, the method further includes the following act S202'.

In the act S202', the terminal device receives first indication information, which is used to indicate that the beam failure detection state is switched from the second state to the first state.

In some embodiments, the first indication information may be carried in any one of an RRC signaling, a MAC CE, and a PDCCH.

In a specific implementation, the terminal device can not only determine that the beam failure detection state is switched from the second state to the first state by the act S202', but also judge that the terminal device is in a low mobility state according to a low mobility criterion by using an RSRP measurement value of a serving cell. The terminal device judges whether to switch from the second state to the first state or from the first state to the second state according to whether the terminal device is in the low mobility state.

In an embodiment of the present application, for transmission of the first indication information and the second indication information, an RRC signaling sent by the network device to the terminal device may be expressed as:

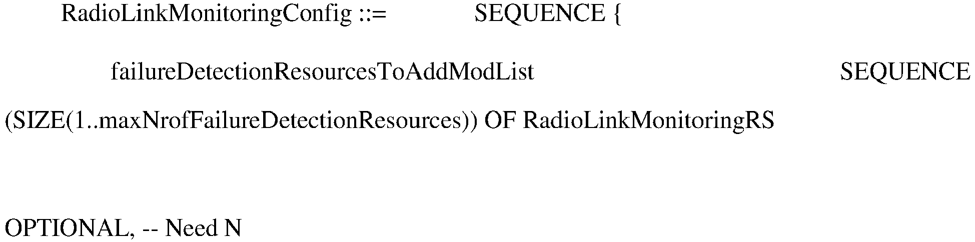

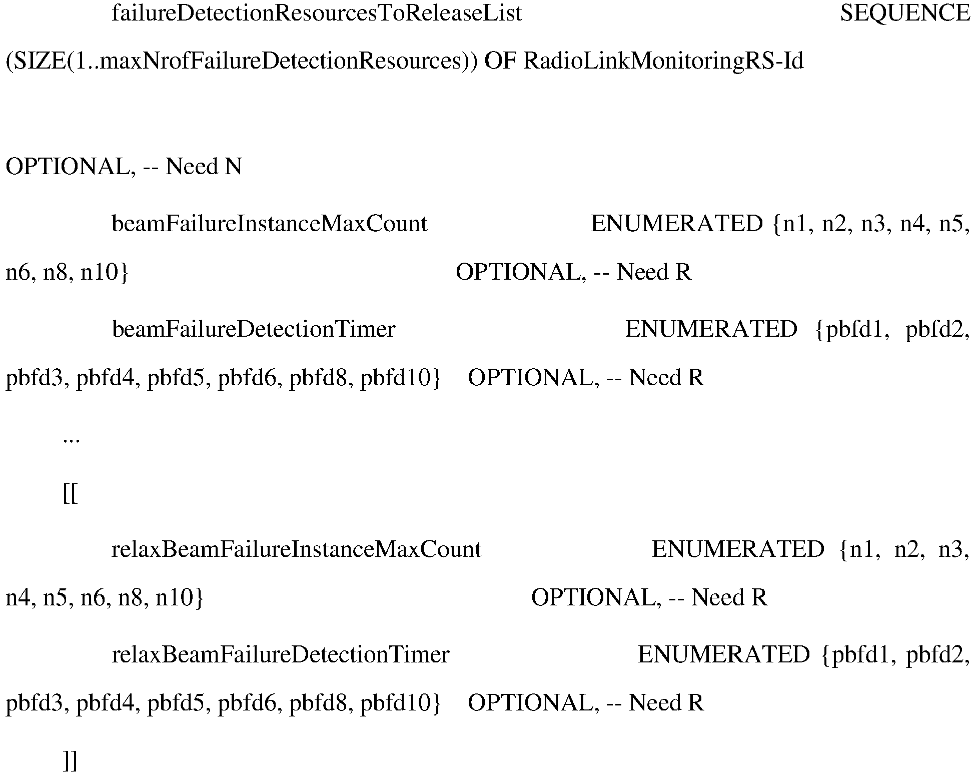

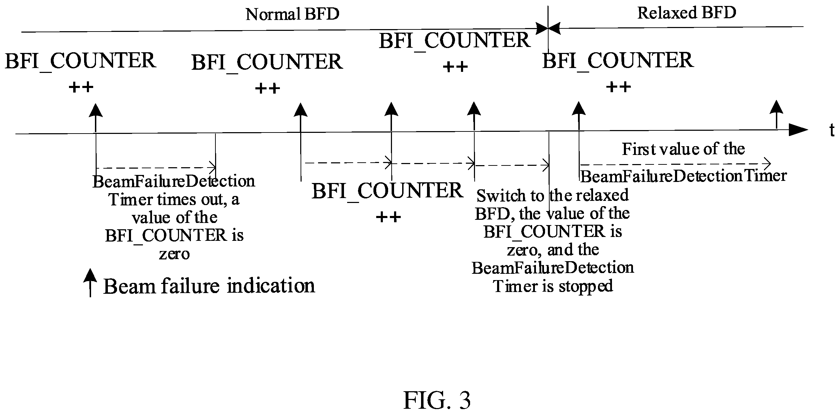

A beam failure detection procedure for switching from the normal BFD state to the relaxed BFD state in an embodiment of the present application is described below based on FIG. 3.

In the normal BFD state, every time a beam failure indication is received, the value of the BFI_COUNTER is increased by 1; when the beam failure detection state is switched from the normal BFD state to the relaxed BFD state, the value of the BFI_COUNTER is configured to be zero. In the relaxed BFD state, the BeamFailureDetectionTimer is started, and the value of the BeamFailureDetectionTimer is configured to be a first value corresponding to the relaxed BFD state, and the value of the BFI_COUNTER is increased by 1 every time a beam failure indication is received. When the value of BeamFailureDetectionTimer is greater than the first value, the value of the BFI_COUNTER is configured to be zero by the terminal device. When the value of the BeamFailureDetectionTimer is less than or equal to the first value and the value of the BFI_COUNTER is greater than or equal to the first BeamFailureInstanceMaxCount, the terminal device determines that a beam failure occurs.

In the above embodiment, the normal BFD state and the relaxed BFD state share a BFI_COUNTER and a BeamFailureDetectionTimer. When the BFD state is switched, the shared BFI_COUNTER needs to be cleared and the running BeamFailureDetectionTimer needs to be stopped.

In some embodiments, the normal BFD state and the relaxed BFD state may correspond to a BFI_COUNTER and a BeamFailureDetectionTimer respectively. For example, the normal BFD state corresponds to the second BFI_COUNTER and the second BeamFailureDetectionTimer. In this scenario, when the normal BFD state is switched to the relaxed BFD state, the value of the second BFI_COUNTER corresponding to the normal BFD state may be cleared or not cleared; however, the value of the first BFI_COUNTER corresponding to the relaxed BFD state needs to be configured to be zero. The second BeamFailureDetectionTimer corresponding to the normal BFD state may be stopped or not stopped; however, the first BeamFailureDetectionTimer corresponding to the relaxed BFD state needs to be started.

Similarly, when the relaxed BFD state is switched to the normal BFD state, the value of the first BFI_COUNTER corresponding to the relaxed BFD state may be cleared or not cleared; however, the value of the second BFI_COUNTER corresponding to the normal BFD state needs to be configured to be zero. The first BeamFailureDetectionTimer corresponding to the relaxed BFD state may be stopped or not stopped; however, the second BeamFailureDetectionTimer corresponding to the normal BFD state needs to be started.

In an embodiment of the present application, different BeamFailureInstanceMaxCounts and different BeamFailureDetectionTimer values are respectively introduced for beam failure detections in the normal BFD state and the relaxed BFD state, which are used to adapt to requirements of the network device for beam failure detection under different measurement criteria (measurement in the normal BFD state and measurement in the relaxed BFD state). When the state is switched between the normal BFD state and the relaxed BFD state, the BeamFailureDetectionTimer is stopped and the value of the BFI_COUNTER is cleared to avoid the influence of beam failure times in different BFD states.

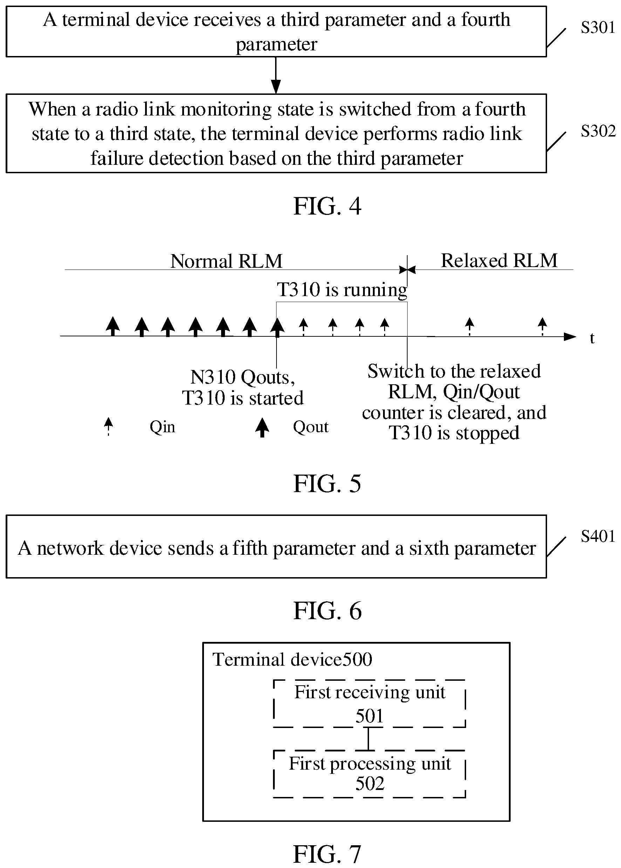

Another alternative processing flow of a measurement method based on state switching provided in an embodiment of the present application, as shown in FIG. 4, includes the following acts S301 and S302.

In the act S301, a terminal device receives a third parameter and a fourth parameter.

In some embodiments the third parameter may include a third value of a T310 timer, a first N311 and a first N310. The second parameter may include a fourth value of the T310 timer, a second N311, and a second N310.

The third parameter is used for radio link failure detection when a radio link monitoring state is in a third state, and the fourth parameter is used for radio link failure detection when the radio link monitoring state is in a fourth state. The third parameter and the fourth parameter are carried in a Radio Link Failure timers and constants (RLF-TimersAndConstants) configuration message.

In a specific implementation, the terminal device receives an RRC reconfiguration message sent by the network device, and obtains the RLF-TimersAndConstants configuration based on the RRC reconfiguration message.

In the act S302, when the radio link monitoring state is switched from a fourth state to a third state, the terminal device performs beam failure detection based on the third parameter.

In some embodiments, the third state is relaxed radio link monitoring and the fourth state is normal radio link monitoring; or, the third state is the normal radio link monitoring, and the fourth state is the relaxed radio link monitoring.

Herein a radio link measurement time interval for the relaxed radio link monitoring is greater than a radio link measurement interval for the normal radio link monitoring.

Taking the third state being the relaxed radio link monitoring, and the fourth state being the normal radio link monitoring as an example, when the radio link monitoring state is switched from the normal radio link monitoring to the relaxed radio link monitoring, the terminal device performs beam failure detection based on the third parameter corresponding to the relaxed radio link monitoring.

In a specific implementation, the terminal device performs radio link failure detection based on a third value of the T310 timer, a first N311 and a first N310 in the third parameter. When the terminal device is in a connected state, the terminal device receives continuous first N310 downlink out-of-sync indications sent by a physical layer, and when the T310 timer, the T304 timer and the T311 timer are not running, the terminal device starts the T310 timer, and configures a value of the T310 timer to be the third value. When the T310 timer does not time out and the terminal device receives continuous first N311 downlink in-sync indications, the terminal device stops running the T310 timer and the terminal device is determined to be in a downlink in-sync state; otherwise, the terminal device is determined to be in the downlink out-of-sync state.

In some embodiments, when the terminal device performs radio link failure detection based on the third parameter, a value of the downlink in-sync indication counter and a value of a downlink out-of-sync indication counter may be configured to be zero according to fourth indication information sent by the network device; and/or, the terminal device determines to stop running the T310 timer according to the received fourth indication information. For example, if the fourth indication information indicates to configure the value of the downlink in-sync indication counter to be zero, the terminal device configures the value of the downlink in-sync indication counter to be zero. If the terminal device does not receive the fourth indication information, the terminal device configures the value of the downlink in-sync indication counter to be zero by default. If the fourth indication information indicates to stop running the T310 timer, the terminal device stops running the T310 timer. If the terminal device does not receive the fourth indication information, the terminal device stops running the T310 timer by default.

The fourth indication information is carried in any one of an RRC signaling, a MAC CE, and a PDCCH.

In some embodiments, the method further includes the following act S302'.

In the act S302', the terminal device receives third indication information, which is used to indicate that the radio link monitoring state is switched from the fourth state to the third state.

In some embodiments, the third indication information may be carried in any one of an RRC signaling, a MAC CE, and a PDCCH.

In a specific implementation, the terminal device can not only determine that the beam failure detection state is switched from the second state to the first state by the act S302', but also judge that the terminal device is in a low mobility state according to a low mobility criterion by using an RSRP measurement value of a serving cell. The terminal device judges whether to switch from the fourth state to the third state or from the third state to the fourth state according to whether the terminal device is in the low mobility state.

In an embodiment of the present application, for transmission of the third indication information and the fourth indication information, an RRC signaling sent by the network device to the terminal device may be expressed as:

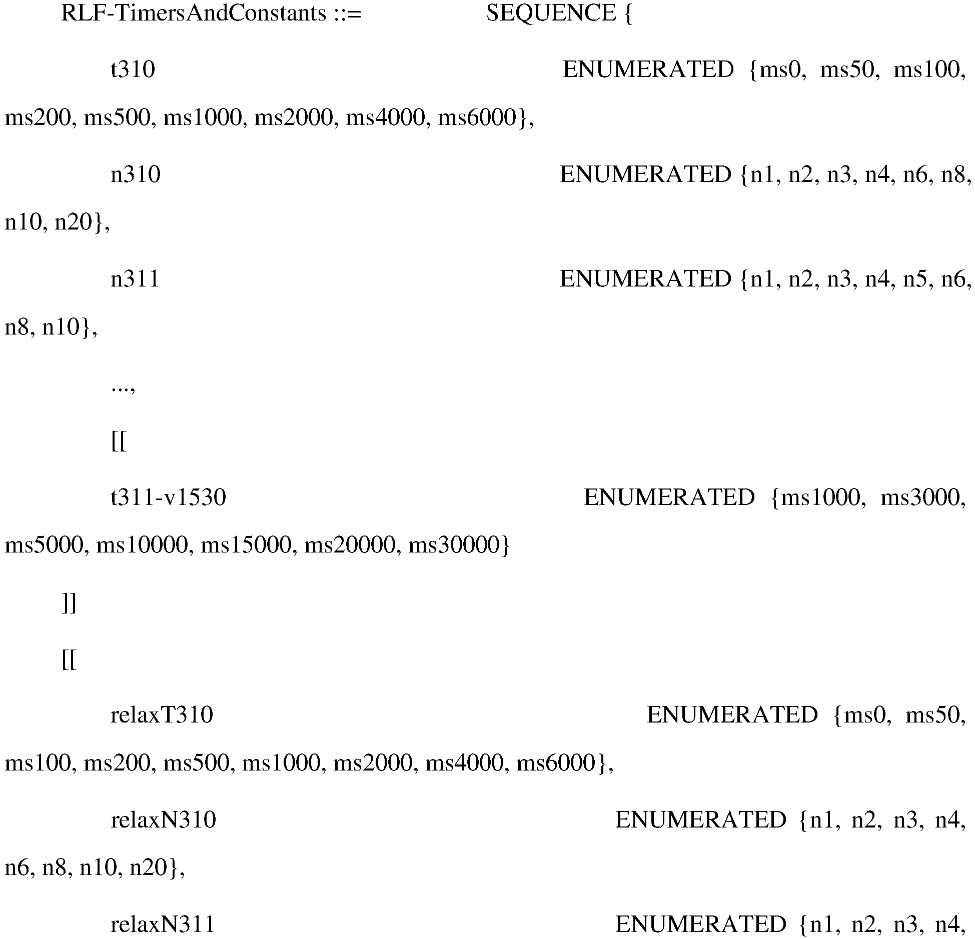

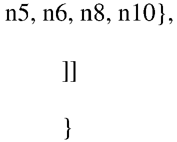

An RLF procedure for switching from a normal RLM state to a relaxed RLM state in an embodiment of the present application is described below based on FIG. 5.

In the normal RLM state, when the second N310 Qouts are received, the T310 timer is started, and the value of the T310 timer is configured to be a third value corresponding to the relaxed RLM state; during the running of the T310 timer, four Qins are received; the normal RLM state is switched to the relaxed RLM state according to the third indication information sent by the network device; then the running T310 timer is stopped, and the values of the Qin and the Qout are cleared. When the terminal device is in a connected state, the terminal device receives continuous first N310 downlink out-of-sync indications sent by a physical layer, and when the T310 timer, the T304 timer and the T311 timer are not running, the terminal device starts the T310 timer, and configures a value of the T310 timer to be the third value. When the T310 timer does not time out and the terminal device receives continuous first N311 downlink in-sync indications, the terminal device stops running the T310 timer and the terminal device is determined to be in a downlink in-sync state is determined; otherwise, the terminal device is determined to be in a downlink out-of-sync state. Herein the first N310, the third value, and the first N311 are adapted to the relaxed the RLM state.

In the above embodiment, the normal RLM state and the relaxed RLM state share a downlink in-sync indication counter, a downlink out-of-sync indication counter and a T310 timer. When the BFD state is switched, the values of the shared downlink in-sync indication counter and the downlink out-of-sync indication counter need to be cleared and the running T310 timer needs to be stopped.

In some embodiments, the normal RLM state and the relaxed RLM state may correspond to a downlink in-sync indication counter, a downlink out-of-sync indication counter, and a T310 timer, respectively. For example, the normal RLM state corresponds to the second downlink in-sync indication counter, the second downlink out-of-sync indication counter and the second T310 timer. In this scenario, when the normal RLM state is switched to the relaxed RLM state, the values of the second downlink in-sync indication counter and the second downlink out-of-sync indication counter corresponding to the normal RLM state may be cleared or not cleared; however, the values of the first downlink in-sync indication counter and the first downlink out-of-sync indication counter corresponding to the relaxed RLM state need to be configured to be zero. The second T310 timer corresponding to the normal RLM state may be stopped or may not be stopped; however, the first T310 timer corresponding to the relaxed RLM state needs to be started.

Similarly, when the relaxed RLM state is switched to the normal RLM state, the values of the first downlink in-sync indication counter and the first downlink out-of-sync indication counter corresponding to the relaxed RLM state may be cleared or not cleared; however, the values of the second downlink in-sync indication counter and the second downlink out-of-sync indication counter corresponding to the normal RLM state need to be configured to be zero. The first T310 timer corresponding to the relaxed RLM state may be stopped or not be stopped; however, the second T310 timer corresponding to the normal RLM state needs to be started.

In an embodiment of the present application, different values of the T310 timer and different values of the N311 and different values of the N310 are respectively introduced for RLF detections in the normal RLM state and the relaxed RLM state. These different values are used to adapt to requirements of the network device for RLF detection under different measurement criteria (measurement in the normal RLM state and measurement in the relaxed RLM state). When the state is switched between the normal RLM state and the relaxed RLM state, the T310 timer is stopped, and the values of the downlink in-sync indication counter and the downlink out-of-sync indication counter are cleared, so that the influence of the radio link failure times in different RLM states can be avoided.

Yet another alternative processing flow of a measurement method based on state switching provided in an embodiment of the present application, as shown in FIG. 6, includes the following act S401.

In the act S401, a network device sends a fifth parameter and a sixth parameter.

In some embodiments, the fifth parameter is used for beam failure detection when a beam failure detection state is switched from a second state to a first state, and the sixth parameter is used for beam failure detection when the beam failure detection state is switched from the first state to the second state.

Alternatively, the first state is relaxed beam failure detection and the second state is normal beam failure detection; or, the first state is the normal beam failure detection and the second state is the relaxed beam failure detection. Herein a beam measurement time interval of the relaxed beam failure detection is larger than a beam measurement time interval of the normal beam failure detection.

In this scenario, the fifth parameter and the sixth parameter may be carried in a radio link monitoring configuration message, the fifth parameter and the sixth parameter may be carried in an RRC reconfiguration message.

In this scenario, the method may also include the following act S400.

In the act S400, the network device sends first indication information, which is used to indicate that a beam failure detection state is switched from a second state to a first state.

Alternatively, the first indication information is carried in any one of an RRC signaling, a MAC CE, and a Physical Downlink Control Channel (PDCCH).

In this scenario, the method may also include the following act S400'.

In the act S400', the network device sends second indication information, which is used to indicate to configure a value of a BFI_COUNTER to be zero, and/or the second indication information is used to indicate to stop running a BeamFailureDetectionTimer.

The second indication information is carried in any one of an RRC signaling, a MAC CE, and a PDCCH.

In some other embodiments, the fifth parameter is used for radio link failure detection when a radio link monitoring state is switched from a fourth state to a third state, and the sixth parameter is used for radio link failure detection when the radio link monitoring state is switched from the third state to the fourth state.

Alternatively, the third state is relaxed radio link monitoring and the fourth state is normal radio link monitoring; or, the third state is the normal radio link monitoring, and the fourth state is the relaxed radio link monitoring. Herein a radio link measurement time interval for the relaxed radio link monitoring is greater than a radio link measurement interval for the normal radio link monitoring.

In this scenario, the fifth parameter and the sixth parameter may be carried in a radio link monitoring configuration message, and the fifth parameter and the sixth parameter may be carried in a Radio Resource Control (RRC) reconfiguration message.

In this scenario, the method may also include the following act S40a.

In the act S40a, the network device sends third indication information, which is used to indicate that the radio link monitoring state is switched from the fourth state to the third state.

Herein the third indication information is carried in any one of an RRC signaling, a MAC CE, and a PDCCH.

In this scenario, the method may also include the following act S40b.

In the act S40b, the network device sends fourth indication information, which is used to indicate to configure a value of the downlink in-sync indication counter and a value of the downlink out-of-sync indication counter to be zero, and/or the fourth indication information is used to indicate to stop running a T310 timer.

Herein the fourth indication information is carried in any one of an RRC signaling, a MAC CE, and a PDCCH.

A terminal device is also provided in an embodiment of the present invention. A schematic diagram of an alternative composition structure of a terminal device 500, as shown in FIG. 7, includes a first receiving unit 501 and a first processing unit 502.

The first receiving unit 501 is configured to receive a first parameter and a second parameter.

The first processing unit 502 is configured to perform beam failure detection based on the first parameter when a beam failure detection state is switched from a second state to a first state; wherein the second parameter is used for beam failure detection when the beam failure detection state is switched from the first state to the second state.

In some embodiments, the first parameter and the second parameter are carried in a radio link monitoring configuration message.

In some embodiments, the first parameter and the second parameter are carried in an RRC reconfiguration message.

In some embodiments, the first receiving unit 501 is further configured to receive first indication information, which is used to indicate that the beam failure detection state is switched from the second state to the first state.

In some embodiments, the first indication information is carried in any one of an RRC signaling, a MAC CE, and a Physical Downlink Control Channel (PDCCH).

In some embodiments, the first processing unit 502 is configured to configure a value of a BFI_COUNTER to be zero; and/or, to stop running a BeamFailureDetectionTimer.

In some embodiments, the first processing unit 502 is configured to perform beam failure detection based on a first BeamFailureInstanceMaxCount and a first value of the BeamFailureDetectionTimer in the first parameter.

In some embodiments, the first processing unit 502 is configured to increase a value of a BFI_COUNTER by 1, start or restart the BeamFailureDetectionTimer, and configure the value of the BeamFailureDetectionTimer to be the first value when a beam failure indication sent by a physical layer is received; configure the value of the BFI_COUNTER to be zero when the BeamFailureDetectionTimer times out; and determine that a beam failure occurs when the BeamFailureDetectionTimer does not time out and the value of the BFI_COUNTER is greater than or equal to the first BeamFailureInstanceMaxCount.

In some embodiments, the first processing unit 502 is configured to determine to configure the value of the configuration BFI_COUNTER to be zero based on the received second indication information; and/or, determine to stop running the BeamFailureDetectionTimer based on the received second indication information.

In some embodiments, the second indication information is carried in any one of an RRC signaling, a MAC CE, and a PDCCH.

In some embodiments, the first state is relaxed beam failure detection and the second state is normal beam failure detection; or, the first state is the normal beam failure detection and the second state is the relaxed beam failure detection.

In some embodiments, a beam measurement time interval of the relaxed beam failure detection is larger than a beam measurement time interval of the normal beam failure detection.

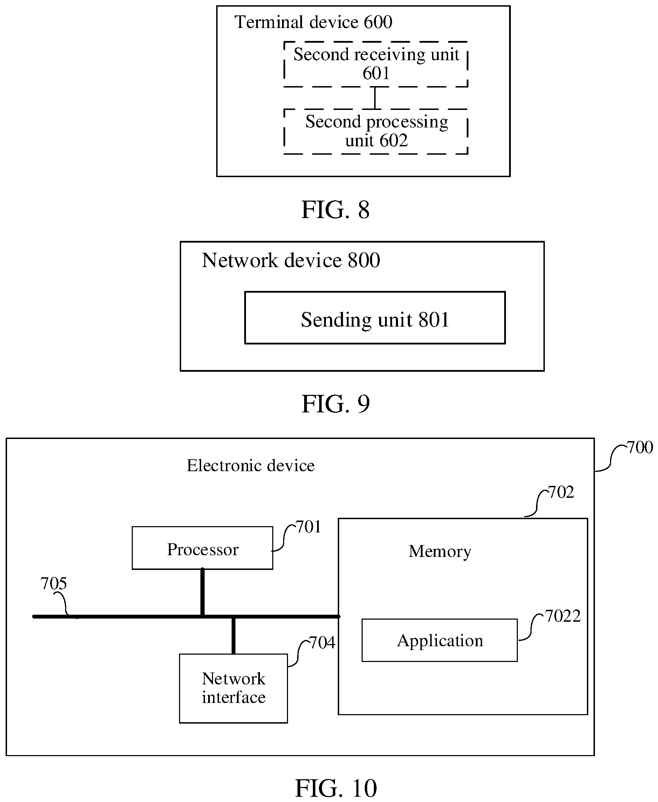

A terminal device is also provided in an embodiment of the present invention. A schematic diagram of another alternative composition structure of a terminal device 600, as shown in FIG. 8, includes a second receiving unit 601 and a second processing unit 602.

The second receiving unit 601 is configured to receive a third parameter and a fourth parameter.

The second processing unit 602 is configured to perform radio link failure detection based on the third parameter when a radio link monitoring state is switched from a fourth state to a third state; wherein the fourth parameter is used for radio link failure detection when the radio link monitoring state is switched from the third state to the fourth state.

In some embodiments, the third parameter and the fourth parameter are carried in a radio link failure timers and constants configuration message.

In some embodiments, the third parameter and the fourth parameter are carried in a Radio Resource Control (RRC) reconfiguration message.

In some embodiments, the second receiving unit 601 is further configured to receive third indication information for indicating that the state of the radio link monitoring is switched from the fourth state to the third state.

In some embodiments, the third indication information is carried in any one of an RRC signaling, a MAC CE, and a PDCCH.

In some embodiments, the second processing unit 602 is configured to configure a value of the downlink in-sync indication counter and a value of a downlink out-of-sync indication counter to be zero; and/or, to stop running the T310 timer.

In some embodiments, the second processing unit 602 is configured to perform radio link failure detection based on a third value of the T310 timer, a first N311 and a first N310 in the third parameter.

In some embodiments, the second processing unit 602 is configured to, when the terminal device is in a connected state, the second receiving unit receives continuous first N310 downlink out-of-sync indications sent by a physical layer, and a third value of the T310 timer, the T304 timer and the T311 timer are not running, start the T310 timer and configure a value of the T310 timer to be the third value; and when the T310 timer does not time out and the second receiving unit receives continuous first N311 downlink in-sync indications, stop running the T310 timer and determine that the terminal device is in a downlink in-sync state; otherwise, determine that the terminal device is in a downlink out-of-sync state.

In some embodiments, the second processing unit 602 is configured to determine to configure the value of the downlink in-sync indication counter and the value of the downlink out-of-sync indication counter to be zero according to the received fourth indication information; and/or, determine to stop running the T310 timer according to the received fourth indication information.

In some embodiments, the fourth indication information is carried in any one of an RRC signaling, a MAC CE, and a PDCCH.

In some embodiments, the third state is relaxed radio link monitoring and the fourth state is normal radio link monitoring; or, the third state is the normal radio link monitoring, and the fourth state is the relaxed radio link monitoring.

In some embodiments, a radio link measurement time interval for the relaxed radio link monitoring is greater than a radio link measurement interval for the normal radio link monitoring.

A network device is also provided in an embodiment of the present invention. A schematic diagram of an alternative composition structure of a network device 800, as shown in FIG. 9, includes a sending unit 801.

The sending unit 801 is configured to send a fifth parameter and a sixth parameter; wherein the fifth parameter is used for beam failure detection when a beam failure detection state is switched from a second state to a first state, and the sixth parameter is used for beam failure detection when a beam failure detection state is switched from the first state to the second state; or the fifth parameter is used for radio link failure detection when a radio link monitoring state is switched from a fourth state to a third state, and the sixth parameter is used for radio link failure detection when the radio link monitoring state is switched from the third state to the fourth state.

In some embodiments, when the fifth parameter and the sixth parameter are used for beam failure detection, the fifth parameter and the sixth parameter are carried in a radio link monitoring configuration message.

In some embodiments, when the fifth parameter and the sixth parameter are used for beam failure detection, the fifth parameter and the sixth parameter are carried in a Radio Resource Control (RRC) reconfiguration message.

In some embodiments, when the fifth parameter and the sixth parameter are used for beam failure detection, the sending unit is further configured to send first indication information, which is used to indicate that the beam failure detection state is switched from the second state to the first state.

In some embodiments, the first indication information is carried in any one of an RRC signaling, a MAC CE, and a PDCCH.

In some embodiments, the first state is relaxed beam failure detection and the second state is normal beam failure detection; or, the first state is the normal beam failure detection and the second state is the relaxed beam failure detection.

In some embodiments, a beam measurement time interval of the relaxed beam failure detection is larger than a beam measurement time interval of the normal beam failure detection.

In some embodiments, when the fifth parameter and the sixth parameter is used for beam failure detection, the sending unit is further configured to send second indication information; wherein the second indication information is used to indicate to configure a value of a BFI_COUNTER to be zero, and/or the second indication information is used to indicate to stop running a BeamFailureDetectionTimer.

In some embodiments, the second indication information is carried in any one of an RRC signaling, a MAC CE, and a PDCCH.

In some embodiments, when the fifth parameter and the sixth parameter are used for radio link monitoring, the fifth parameter and the sixth parameter are carried in a radio link failure timers and constants configuration message.

In some embodiments, the fifth parameter and the sixth parameter are carried in an RRC reconfiguration message.

In some embodiments, the sending unit 801 is further configured to send third indication information for indicating that the state of the radio link monitoring is switched from the fourth state to the third state.

In some embodiments, the third indication information is carried in any one of an RRC signaling, a MAC CE, and a PDCCH.

In some embodiments, the third state is relaxed radio link monitoring and the fourth state is normal radio link monitoring; or, the third state is the normal radio link monitoring, and the fourth state is the relaxed radio link monitoring.

In some embodiments, a radio link measurement time interval for the relaxed radio link monitoring is greater than a radio link measurement interval for the normal radio link monitoring.

In some embodiments, when the fifth parameter and the sixth parameter is used for radio link failure detection, the sending unit 801 is further configured to send fourth indication information; wherein the fourth indication information is used to indicate to configure a value of the downlink in-sync indication counter and a value of the downlink out-of-sync indication counter to be zero, and/or the fourth indication information is used to indicate to stop running a T310 timer.

In some embodiments, the fourth indication information is carried in any one of an RRC signaling, a MAC CE, and a PDCCH.

A terminal device is also provided in an embodiment of the present application, which includes: a processor and a memory configured to store a computer program that is capable of being run on the processor, wherein the processor is configured to perform acts of the measurement method based on state switching performed by the terminal device when the computer program is run on the processor.

A network device is also provided in an embodiment of the present application, which includes: a processor and a memory configured to store a computer program that is capable of being run on the processor, wherein the processor is configured to perform acts of the measurement method based on state switching performed by the network device when the computer program is run on the processor.

A chip is also provided in an embodiment of the application, which includes a processor configured to invoke and run a computer program from a memory, to enable a device having the chip installed therein to perform the measurement method based on state switching performed by the terminal device.

A chip is also provided in an embodiment of the application, which includes a processor configured to invoke and run a computer program from a memory, to enable a device having the chip installed therein to perform the measurement method based on state switching performed by the network device.

A storage medium is also provided in an embodiment of the present application, which stores an executable program, wherein, when the executable program is executed by a processor, the measurement method based on state switching performed by the terminal device is implemented.

A storage medium is also provided in an embodiment of the present application, which stores an executable program, wherein, when the executable program is executed by a processor, the measurement method based on state switching performed by the network device is implemented.

A computer program product is also provided in an embodiment of the present application, which includes computer program instructions that enable a computer to perform the measurement method based on state switching performed by the network device.

A computer program product is also provided in an embodiment of the present application, which includes computer program instructions that enable a computer to perform the measurement method based on state switching performed by the network device.

A computer program is also provided in an embodiment of the present application, which enables a computer to perform the measurement method based on state switching performed by the terminal device.

A computer program is also provided in an embodiment of the present application, which enables a computer to perform the measurement method based on state switching performed by the network device.

FIG. 10 is a schematic diagram of a hardware structure of an electronic device (a terminal device or a network device) of an embodiment of the present application. The electronic device 700 includes: at least one processor 701, a memory 702, and at least one network interface 704. Various components in the electronic device 700 are coupled together by a bus system 705. It can be understood that the bus system 705 is used for implementing connection and communication between these components. In addition to a data bus, the bus system 705 further includes a power bus, a control bus, and a status signal bus. However, for clarity of description, all kinds of buses are uniformly referred to as the bus system 705 in FIG. 10.

It can be understood that the memory 702 may be a volatile memory or a non-volatile memory, or may include both the volatile memory and the non-volatile memory. Herein, the non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a ferromagnetic random access memory (FRAM), a Flash Memory, a magnetic surface memory, a compact disk, or a Compact Disc Read-Only Memory (CD-ROM); and the magnetic surface memory may be a magnetic disk memory or a magnetic tape memory. The volatile memory may be a Random Access Memory (RAM) which serves as an external cache. By way of illustrative but not restrictive explanation, many forms of RAMs are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), a Direct Rambus Random Access Memory (DRRAM). The memory 702 described in an embodiment of the present application is intended to include, but is not limited to, these and any other suitable types of memories.

The memory 702 in an embodiment of the present application is configured to store various types of data to support an operation of the electronic device 700. Examples of such data include any computer program for operating on the electronic device 700, such as an application 7022. A program for implementing the method of an embodiment of the present application may be contained in the application 7022.

Methods disclosed in above embodiments of the present application may be applied to the processor 701, or implemented by the processor 701. The processor 701 may be an integrated circuit chip with a signal processing capability. In an implementation process, the acts of the methods described above may be accomplished by integrated logic circuits of hardware in the processor 701 or instructions in a form of software. The above processor 701 may be a general purpose processor, a Digital Signal Processor (DSP), or another programmable logic device, a discrete gate or transistor logic device, or a discrete hardware component, etc. The processor 701 may implement or perform various methods, acts, and logical block diagrams disclosed in the embodiments of the present application. The general purpose processor may be a microprocessor or any conventional processor or the like. The acts of the methods disclosed in the embodiments of the present application may be directly embodied to be implemented by a hardware decoding processor, or may be implemented by a combination of hardware in the decoding processor and software modules. The software module may be located in a storage medium, and the storage medium is located in the memory 702. The processor 701 reads information in the memory 702 and accomplishes the acts of the aforementioned methods in combination with hardware thereof.

In an exemplary embodiment, an electronic device 700 may be implemented by one or more Application Specific Integrated Circuits (ASICs), DSPs, Programmable Logic Devices (PLDs), Complex Programmable Logic Devices (CPLDs), FPGAs, general-purpose processors, controllers, MCUs, MPUs or other electronic components, for performing the aforementioned methods.

The present application is described with reference to flowcharts and/or block diagrams of the methods, the devices (systems), and computer program products of the embodiments of the present application. It should be understood that each flow and/or block in the flowcharts and/or block diagrams, and combinations of flows and/or blocks in the flowcharts and/or block diagrams may be implemented by computer program instructions. These computer program instructions may be provided to a general purpose computer, a special purpose computer, an embedded processor or a processor of other programmable data processing device to produce a machine, such that an apparatus for implementing the functions specified in one or more flows of the flowchart and/or one or more blocks of the block diagram is produced through the instructions which are executed by the computer or the processor of other programmable data processing device.

These computer program instructions may also be stored in a computer-readable memory that can direct a computer or other programmable data processing device to operate in a specific manner, such that the instructions stored in the computer-readable memory produce an article of manufacture including an instruction apparatus that implements the functions specified in one or more flows of the flowchart and/or one or more blocks of the block diagram.

These computer program instructions may also be loaded onto a computer or other programmable data processing device, such that a series of operational acts are performed on the computer or other programmable device to produce a computer-implemented processing, thereby the instructions which are executed on the computer or other programmable device are used for implementing acts of the functions specified in one or more flows of the flowchart and/or one or more blocks of the block diagram.

It should be understood that the terms "system" and "network" in the present application are often used interchangeably herein. The term "and/or" in the present application only describes an association relation between associated objects, indicating that there may be three relations, for example, A and/or B may indicate three cases: A alone, both A and B, and B alone. In addition, the symbol "/" in the present application generally indicates that there is a "or" relationship between the associated objects before and after "/".

The above described is only the preferred embodiments of the present application, and is not intended to limit the protection scope of the present application. Any modification, equivalent substitution, improvement, or the like, made within the essence and the principle of the present application, shall be included within the protection scope of the present application.

## Claims

1. A measurement method based on state switching, comprising:
receiving, by a terminal device, a first parameter and a second parameter;
performing, by the terminal device, beam failure detection based on the first parameter when a beam failure detection state is switched from a second state to a first state;
wherein the second parameter is used for beam failure detection when the beam failure detection state is switched from the first state to the second state.

2. The method of claim 1, wherein the first parameter and the second parameter are carried in a radio link monitoring configuration message.

3. The method of claim 1 or 2, wherein the first parameter and the second parameter are carried in a Radio Resource Control (RRC) reconfiguration message.

4. The method of any one of claims 1 to 3, further comprising:
receiving, by the terminal device, first indication information, which is used to indicate that the beam failure detection state is switched from the second state to the first state.

5. The method of claim 4, wherein the first indication information is carried in any one of the followings:
an RRC signaling, a Media Access Control Control Element (MAC CE) and a Physical Downlink Control Channel (PDCCH).

6. The method of any one of claims 1 to 5, wherein the performing, by the terminal device, beam failure detection based on the first parameter, comprises:
configuring, by the terminal device, a value of a BFI_COUNTER to be zero;
and/or, stopping, by the terminal device, running a BeamFailureDetectionTimer.

7. The method of any one of claims 1 to 6, wherein the performing, by the terminal device, beam failure detection based on the first parameter, comprises:
performing, by the terminal device, the beam failure detection based on a first BeamFailureInstanceMaxCount and a first value of a BeamFailureDetectionTimer in the first parameter.

8. The method of claim 7, wherein the performing, by the terminal device, the beam failure detection based on the first BeamFailureInstanceMaxCount and the first value of the BeamFailureDetectionTimer in the first parameter, comprises:
when the terminal device receives a beam failure indication sent by a physical layer, configuring, by the terminal device, to increase a value of a BFI_COUNTER by 1, starting or restarting the BeamFailureDetectionTimer, and configuring a value of the BeamFailureDetectionTimer to be the first value;
when the BeamFailureDetectionTimer times out, configuring, by the terminal device, the value of the BFI_COUNTER to be zero; and
when the BeamFailureDetectionTimer does not time out and the value of the BFI_COUNTER is greater than or equal to the first BeamFailureInstanceMaxCount, determining, by the terminal device, that a beam failure occurs.

9. The method of claim 6, wherein the terminal device determines to configure the value of the BFI_COUNTER to be zero based on received second indication information;
and/or, the terminal device determines to stop running the BeamFailureDetectionTimer based on the received second indication information.

10. The method of claim 9, wherein the second indication information is carried in any one of the followings:
an RRC signaling, a MAC CE and a PDCCH.

11. The method of any one of claims 1 to 10, wherein
the first state is relaxed beam failure detection, and the second state is normal beam failure detection; or
the first state is the normal beam failure detection, and the second state is the relaxed beam failure detection.

12. The method of claim 11, wherein a beam measurement time interval of the relaxed beam failure detection is larger than a beam measurement time interval of the normal beam failure detection.

13. A measurement method based on state switching, comprising:
receiving, by a terminal device, a third parameter and a fourth parameter;
performing, by the terminal device, radio link failure detection based on the third parameter when a radio link monitoring state is switched from a fourth state to a third state;
wherein the fourth parameter is used for radio link failure detection when the radio link monitoring state is switched from the third state to the fourth state.

14. The method of claim 13, wherein the third parameter and the fourth parameter are carried in a radio link failure timers and constants configuration message.

15. The method of claim 13 or 14, wherein the third parameter and the fourth parameter are carried in a Radio Resource Control (RRC) reconfiguration message.

16. The method of any one of claims 13 to 15, further comprising:
receiving, by the terminal device, third indication information, which is used to indicate that the radio link monitoring state is switched from the fourth state to the third state.

17. The method of claim 16, wherein the third indication information is carried in any one of the followings:
an RRC signaling, a Media Access Control Control Element (MAC CE) and a Physical Downlink Control Channel (PDCCH).

18. The method of any one of claims 13 to 17, wherein the performing, by the terminal device, radio link failure detection based on the third parameter, comprises:
configuring, by the terminal device, a value of a downlink in-sync indication counter and a value of a downlink out-of-sync indication counter to be zero;
and/or, stopping, by the terminal device, running a T310 timer.

19. The method of any one of claims 13 to 18, wherein the performing, by the terminal device, radio link failure detection based on the third parameter, comprises:
performing, by the terminal device, the radio link failure detection based on a third value of a T310 timer, a first N311 and a first N310 in the third parameter.

20. The method of claim 19, wherein the performing, by the terminal device, the radio link failure detection based on the third value of the T310 timer, the first N311 and the first N310 in the third parameter, comprises:
when the terminal device is in a connected state, the terminal device receives continuous first N310 downlink out-of-sync indications sent by a physical layer, and the T310 timer, a T304 timer and a T311 timer are not running, starting the T310 timer and configuring a value of the T310 timer to be the third value;
when the T310 timer does not time out and the terminal device receives continuous first N311 downlink in-sync indications, stopping, by the terminal device, running the T310 timer, and determining that the terminal device is in a downlink in-sync state; otherwise, determining that the terminal device is in a downlink out-of-sync state.

21. The method of claim 18, wherein the terminal device determines to configure the value of the downlink in-sync indication counter and the value of the downlink out-of-sync indication counter to be zero based on received fourth indication information;
and/or, the terminal device determines to stop running the T310 timer according to the received fourth indication information.

22. The method of claim 21, wherein the fourth indication information is carried in any one of the followings:
an RRC signaling, a MAC CE and a PDCCH.

23. The method of any one of claims 13 to 22, wherein the third state is relaxed radio link monitoring and the fourth state is normal radio link monitoring; or
the third state is the normal radio link monitoring, and the fourth state is the relaxed radio link monitoring.

24. The method of claim 23, wherein a radio link measurement time interval of the relaxed radio link monitoring is greater than a radio link measurement interval of the normal radio link monitoring.

25. A measurement method based on state switching, comprising:
sending, by a network device, a fifth parameter and a sixth parameter;
wherein the fifth parameter is used for beam failure detection when a beam failure detection state is switched from a second state to a first state, and the sixth parameter is used for beam failure detection when the beam failure detection state is switched from the first state to the second state; or
the fifth parameter is used for radio link failure detection when a radio link monitoring state is switched from a fourth state to a third state, and the sixth parameter is used for radio link failure detection when the radio link monitoring state is switched from the third state to the fourth state.

26. The method of claim 25, wherein when the fifth parameter and the sixth parameter are used for the beam failure detection, the fifth parameter and the sixth parameter are carried in a radio link monitoring configuration message.

27. The method of claim 25 or 26, wherein when the fifth parameter and the sixth parameter are used for the beam failure detection, the fifth parameter and the sixth parameter are carried in a Radio Resource Control (RRC) reconfiguration message.

28. The method of any one of claims 25 to 27, wherein, when the fifth parameter and the sixth parameter are used for the beam failure detection, the method further comprises:
sending, by the network device, first indication information, which is used to indicate that the beam failure detection state is switched from the second state to the first state.

29. The method of claim 28, wherein the first indication information is carried in any one of the followings:
an RRC signaling, a Media Access Control Control Element (MAC CE) and a Physical Downlink Control Channel (PDCCH).

30. The method of any one of claims 25 to 29, wherein the first state is relaxed beam failure detection and the second state is normal beam failure detection; or
the first state is the normal beam failure detection and the second state is the relaxed beam failure detection.

31. The method of claim 30, wherein a beam measurement time interval of the relaxed beam failure detection is larger than a beam measurement time interval of the normal beam failure detection.

32. The method of any one of claims 25 to 31, wherein, when the fifth parameter and the sixth parameter are used for the beam failure detection, the method further comprises:
sending, by the network device, second indication information;
wherein the second indication information is used to indicate to configure a value of a BFI_COUNTER to be zero, and/or the second indication information is used to indicate to stop running a BeamFailureDetectionTimer.

33. The method of claim 32, wherein the second indication information is carried in any one of the followings:
an RRC signaling, a MAC CE and a PDCCH.

34. The method of claim 25, wherein when the fifth parameter and the sixth parameter are used for the radio link failure detection, the fifth parameter and the sixth parameter are carried in a radio link failure timers and constants configuration message.

35. The method of claim 34, wherein the fifth parameter and the sixth parameter are carried in an RRC reconfiguration message.

36. The method of any one of claims 25, 34 and 35, further comprising:
sending, by the network device, third indication information, which is used to indicate that the radio link monitoring state is switched from the fourth state to the third state.

37. The method of claim 36, wherein the third indication information is carried in any one of the followings:
an RRC signaling, a MAC CE and a PDCCH.

38. The method of any one of claims 25, 34 to 37, wherein the third state is relaxed radio link monitoring and the fourth state is normal radio link monitoring; or
the third state is the normal radio link monitoring, and the fourth state is the relaxed radio link monitoring.

39. The method of claim 38, wherein a radio link measurement time interval of the relaxed radio link monitoring is greater than a radio link measurement interval of the normal radio link monitoring.

40. The method of any one of claims 25, 34 to 38, wherein when the fifth parameter and the sixth parameter are used for the radio link failure detection, the method further comprises:
sending, by the network device, fourth indication information;
wherein the fourth indication information is used to indicate to configure a value of a downlink in-sync indication counter and a value of a downlink out-of-sync indication counter to be zero, and/or the fourth indication information is used to indicate to stop running a T310 timer.

41. The method of claim 40, wherein the fourth indication information is carried in any one of the followings:
an RRC signaling, a MAC CE and a PDCCH.

42. A terminal device, comprising:
a first receiving unit, configured to receive a first parameter and a second parameter;
a first processing unit, configured to perform beam failure detection based on the first parameter when a beam failure detection state is switched from a second state to a first state; wherein the second parameter is used for beam failure detection when the beam failure detection state is switched from the first state to the second state.

43. The terminal device of claim 42, wherein the first parameter and the second parameter are carried in a radio link monitoring configuration message.

44. The terminal device of claim 42 or 43, wherein the first parameter and the second parameter are carried in a Radio Resource Control (RRC) reconfiguration message.

45. The terminal device according to any one of claims 42 to 44, wherein the first receiving unit is further configured to receive first indication information, which is used to indicate that the beam failure detection state is switched from the second state to the first state.

46. The terminal device of claim 45, wherein the first indication information is carried in any one of the followings:
an RRC signaling, a Media Access Control Control Element (MAC CE) and a Physical Downlink Control Channel (PDCCH).

47. The terminal device of any one of claims 42 to 46, wherein the first processing unit is configured to, configure a value of a BFI_COUNTER to be zero; and/or, stop running a BeamFailureDetectionTimer.

48. The terminal device of any one of claims 42 to 47, wherein the first processing unit is configured to perform the beam failure detection based on a first BeamFailureInstanceMaxCount and a first value of a BeamFailureDetectionTimer in the first parameter.

49. The terminal device according to claim 48, wherein the first processing unit is configured to,
increase a value of a BFI_COUNTER by 1, start or restart the BeamFailureDetectionTimer, and configure a value of the BeamFailureDetectionTimer to be the first value when a beam failure indication sent by a physical layer is received;
configure the value of the BFI_COUNTER to be zero when the BeamFailureDetectionTimer times out; and
determine that a beam failure occurs when the BeamFailureDetectionTimer does not time out and the value of the BFI_COUNTER is greater than or equal to the first BeamFailureInstanceMaxCount.

50. The terminal device of claim 47, wherein the first processing unit is configured to determine to configure the value of the BFI_COUNTER to be zero based on received second indication information;
and/or, determine to stop running the BeamFailureDetectionTimer based on the received second indication information.

51. The terminal device of claim 50, wherein the second indication information is carried in any one of the followings:
an RRC signaling, a MAC CE and a PDCCH.

52. The terminal device of any one of claims 42 to 51, wherein the first state is relaxed beam failure detection and the second state is normal beam failure detection; or
the first state is the normal beam failure detection and the second state is the relaxed beam failure detection.

53. The terminal device of claim 52, wherein a beam measurement time interval of the relaxed beam failure detection is larger than a beam measurement time interval of the normal beam failure detection.

54. A terminal device, comprising:
a second receiving unit, configured to receive a third parameter and a fourth parameter;
a second processing unit, configured to perform radio link failure detection based on the third parameter when a radio link monitoring state is switched from a fourth state to a third state;
wherein the fourth parameter is used for radio link failure detection when the radio link monitoring state is switched from the third state to the fourth state.

55. The terminal device of claim 54, wherein the third parameter and the fourth parameter are carried in a radio link failure timers and constants configuration message.

56. The terminal device of claim 54 or 55, wherein the third parameter and the fourth parameter are carried in a Radio Resource Control (RRC) reconfiguration message.

57. The terminal device according to any one of claims 54 to 56, wherein the second receiving unit is further configured to receive third indication information, which is used to indicate that the radio link monitoring state is switched from the fourth state to the third state.

58. The terminal device of claim 57, wherein the third indication information is carried in any one of the followings:
an RRC signaling, a Media Access Control Control Element (MAC CE) and a Physical Downlink Control Channel (PDCCH).

59. The terminal device of any one of claims 54 to 58, wherein the second processing unit is configured to configure a value of a downlink in-sync indication counter and a value of a downlink out-of-sync indication counter to be zero; and/or, stop running a T310 timer.

60. The terminal device of any one of claims 54 to 59, wherein the second processing unit is configured to perform the radio link failure detection based on a third value of a T310 timer, the first N311 and the first N310 in the third parameter.

61. The terminal device of claim 60, wherein, the second processing unit is configured to, when the terminal device is in a connected state, the second receiving unit receives continuous first N310 downlink out-of-sync indications sent by a physical layer, and the third value of the T310 timer, a T304 timer and a T311 timer are not running, start the T310 timer and configure a value of the T310 timer to be the third value;
when the T310 timer does not time out and the second receiving unit receives continuous first N311 downlink in-sync indications, stop running the T310 timer and determine that the terminal device is in a downlink in-sync state; otherwise, determine that the terminal device is in a downlink out-of-sync state.

62. The terminal device of claim 59, wherein the second processing unit is configured to determine to configure the value of the downlink in-sync indication counter and the value of the downlink out-of-sync indication counter to be zero based on received fourth indication information; and/or,
determine to stop running the T310 timer according to the received fourth indication information.

63. The terminal device of claim 62, wherein the fourth indication information is carried in any one of the followings:
an RRC signaling, a MAC CE and a PDCCH.

64. The terminal device of any one of claims 54 to 63, wherein the third state is relaxed radio link monitoring and the fourth state is normal radio link monitoring; or
the third state is the normal radio link monitoring, and the fourth state is the relaxed radio link monitoring.

65. The terminal device of claim 64, wherein a radio link measurement time interval of the relaxed radio link monitoring is greater than a radio link measurement interval of the normal radio link monitoring.

66. A network device, comprising:
a sending unit, configured to send a fifth parameter and a sixth parameter;
wherein the fifth parameter is used for beam failure detection when a beam failure detection state is switched from a second state to a first state, and the sixth parameter is used for beam failure detection when the beam failure detection state is switched from the first state to the second state; or
the fifth parameter is used for radio link failure detection when a radio link monitoring state is switched from a fourth state to a third state, and the sixth parameter is used for radio link failure detection when the radio link monitoring state is switched from the third state to the fourth state.

67. The network device of claim 66, wherein when the fifth parameter and the sixth parameter are used for the beam failure detection, the fifth parameter and the sixth parameter are carried in a radio link monitoring configuration message.

68. The network device of claim 66 or 67, wherein when the fifth parameter and the sixth parameter are used for the beam failure detection, the fifth parameter and the sixth parameter are carried in a Radio Resource Control (RRC) reconfiguration message.

69. The network device according to any one of claims 66 to 68, wherein when the fifth parameter and the sixth parameter are used for the beam failure detection, the sending unit is further configured to send first indication information, which is used to indicate that the beam failure detection state is switched from the second state to the first state.

70. The network device of claim 69, wherein the first indication information is carried in any one of the followings:
an RRC signaling, a Media Access Control Control Element (MAC CE) and a Physical Downlink Control Channel (PDCCH).

71. The network device of any one of claims 66 to 70, wherein the first state is relaxed beam failure detection and the second state is normal beam failure detection; or
the first state is the normal beam failure detection and the second state is the relaxed beam failure detection.

72. The network device of claim 71, wherein a beam measurement time interval of the relaxed beam failure detection is larger than a beam measurement time interval of the normal beam failure detection.

73. The network device according to any one of claims 66 to 72, wherein when the fifth parameter and the sixth parameter is used for the beam failure detection, the sending unit is further configured, to send second indication information;
wherein the second indication information is used to indicate to configure a value of a BFI_COUNTER to be zero, and/or the second indication information is used to indicate to stop running a BeamFailureDetectionTimer.

74. The network device of claim 73, wherein the second indication information is carried in any one of the followings:
an RRC signaling, a MAC CE and a PDCCH.

75. The network device of claim 66, wherein when the fifth parameter and the sixth parameter are used for the radio link failure detection, the fifth parameter and the sixth parameter are carried in a radio link failure timers and constants configuration message.

76. The network device of claim 75, wherein the fifth parameter and the sixth parameter are carried in an RRC reconfiguration message.

77. The network device of any one of claims 66, 75 and 76, wherein the sending unit is further configured to send third indication information, which is used to indicate that the radio link monitoring state is switched from the fourth state to the third state.

78. The network device of claim 77, wherein the third indication information is carried in any one of the followings:
an RRC signaling, a MAC CE and a PDCCH.

79. The network device of any one of claims 66, 75 to 78, wherein the third state is relaxed radio link monitoring and the fourth state is normal radio link monitoring; or
the third state is the normal radio link monitoring, and the fourth state is the relaxed radio link monitoring.

80. The network device of claim 79, wherein a radio link measurement time interval of the relaxed radio link monitoring is greater than a radio link measurement interval of the normal radio link monitoring.

81. The network device according to any one of claims 66, 75 to 79, wherein the sending unit is further configured to send fourth indication information when the fifth parameter and the sixth parameter are used for the radio link failure detection;
wherein the fourth indication information is used to indicate to configure a value of a downlink in-sync indication counter and a value of a downlink out-of-sync indication counter to be zero, and/or the fourth indication information is used to indicate to stop running a T310 timer.

82. The network device of claim 81, wherein the fourth indication information is carried in any one of the followings:
an RRC signaling, a MAC CE and a PDCCH.

83. A terminal device, comprising: a processor and a memory for storing a computer program that is capable of being run on the processor; wherein
the processor is configured to perform acts of the measurement method based on state switching of any one of claims 1 to 12 when the computer program is run on the processor.

84. A terminal device, comprising: a processor and a memory for storing a computer program that is capable of being run on the processor; wherein
the processor is configured to perform acts of the measurement method based on state switching of any one of claims 13 to 24 when the computer program is run on the processor.

85. A network device, comprising: a processor and a memory for storing a computer program that is capable of being run on the processor; wherein
the processor is configured to perform acts of the measurement method based on state switching of any one of claims 25 to 41 when the computer program is run on the processor.

86. A storage medium storing an executable program, wherein when the executable program is executed by a processor, the measurement method based on state switching of any one of claims 1 to 12 is implemented.

87. A storage medium storing an executable program, wherein when the executable program is executed by a processor, the measurement method based on state switching of any one of claims 13 to 24 is implemented.

88. A storage medium storing an executable program, wherein when the executable program is executed by a processor, the measurement method based on state switching of any one of claims 25 to 41 is implemented.

89. A computer program product, comprising computer program instructions that enable a computer to perform the measurement method based on state switching of any one of claims 1 to 12.

90. A computer program product, comprising computer program instructions that enable a computer to perform the measurement method based on state switching of any one of claims 13 to 24.

91. A computer program product, comprising computer program instructions that enable a computer to perform the measurement method based on state switching of any one of claims 25 to 41.

92. A computer program, enabling a computer to perform the measurement method based on state switching of any one of claims 1 to 12.

93. A computer program, enabling a computer to perform the measurement method based on state switching of any one of claims 13 to 24.

94. A computer program, enabling a computer to perform the measurement method based on state switching of any one of claims 25 to 41.

95. A chip, comprising: a processor configured to invoke and run a computer program from a memory, to enable a device having the chip installed therein to perform the measurement method based on state switching of any one of claims 1 to 12.

96. A chip, comprising: a processor configured to invoke and run a computer program from a memory, to enable a device having the chip installed therein to perform the measurement method based on state switching of any one of claims 13 to 24.

97. A chip, comprising: a processor configured to invoke and run a computer program from a memory, to enable a device having the chip installed therein to perform the measurement method based on state switching of any one of claims 25 to 41.
